# EUROPÄISCHE PATENTSCHRIFT

(11) **EP 2 286 699 B1**
(45) Veröffentlichungstag und Bekanntmachung des Hinweises auf die Patenterteilung: **18.01.2012**
(21) Anmeldenummer: 09168396.1
(22) Anmeldetag: 21.08.2009
(51) Int. Cl.: A47J 31/42, A47J 42/18

(54) **Mahlwerk für eine Kaffeemaschine**
Grinder for a coffee machine
Broyeur pour une machine à café

(43) Veröffentlichungstag der Anmeldung: 23.02.2011
(73) Patentinhaber: Schaerer AG, 4528 Zuchwil (CH)
(72) Erfinder: Hergesell, Harald, 3303 Jegenstorf (CH); Arndt, Peter, 89134 Blaustein (DE); Caputo, Ciro, 89173 Urspring (DE); Gussmann, Jochen, 73527 Schwäbisch Gmünd (DE); Grupp, Martin, 73779 Deizisau (DE); Kiefer, Alexander, 73329 Kuchen (DE); Stohrer, Helmut, 89075 Ulm (DE); Startz, Armin, 89197 Weidenstetten (DE)
(74) Vertreter: BOVARD AG

(56) Entgegenhaltungen:
- EP-A1- 0 676 162
- EP-A1- 1 994 866
- CN-Y- 201 067 340

## Beschreibung

Die vorliegende Erfindung bezieht sich auf ein Mahlwerk für eine Kaffeemaschine, umfassend ein Gehäuse, in welchem eine erste Mahlscheibe angeordnet ist, welche über Antriebsmittel um eine Rotationsachse antreibbar ist, eine zweite Mahlscheibe, welche in einem Einschraubteil befestigt ist, welcher Einschraubteil in das Gehäuse einschraubbar ist und durch Verstellmittel bezüglich des Gehäuses verdrehbar ist und dadurch der Mahlspalt zwischen den beiden Mahlscheiben einstellbar ist, welche Verstellmittel aus einem koaxial zum Einschraubteil angeordneten Antriebsrad gebildet sind, welches mit einem über Stellmittel verdrehbaren Stellrad zusammenwirkt, welches Stellrad am Gehäuse befestigt ist, und eine im Gehäuse angeordnete Zuführöffnung für die Zuführung der zu mahlenden Kaffeebohnen und eine Wegführöffnung für das Wegführen des zwischen den beiden Mahlscheiben gemahlenen Kaffees.

Derartige Mahlwerke für Kaffeemaschinen sind bekannt, beispielsweise zeigt die EP-A 0676162 ein derartiges Mahlwerk. Bei derartigen Mahlwerken werden die Kaffeebohnen zwischen die beiden Mahlscheiben geführt, die eine Mahlscheibe wird über Antriebsmittel rotierend angetrieben, die andere Mahlscheibe ist feststehend, zwischen diesen Mahlscheiben werden die Kaffeebohnen zu Kaffeepulver gemahlen, dass gemahlene Kaffeepulver tritt radial aus dem Mahlspalt aus und wird über eine Austrittsöffnung beispielsweise der Brühkammer einer Kaffeemaschine zugeführt.

Um die Feinheit des Mahlpulvers einstellen zu können, lässt sich die feststehende Mahlscheibe gegen die angetriebene Mahlscheibe hin bzw. von dieser weg bewegen, wozu diese feststehende Mahlscheibe auf einem Einschraubteil, der in das Gehäuse einschraubbar ist, befestigt ist. Dieser Einschraubteil ist mit einem Antriebsrad versehen, welches über einen Stellantrieb bezüglich des Gehäuses verdreht werden kann.

Derartige Mahlwerke sollen in möglichst viele unterschiedliche Kaffeemaschinentypen eingesetzt werden können. Die bezüglich der Mahlscheiben radial ausgerichtete Wegführöffnung für das gemahlene Kaffeepulver ist hierbei festgelegt, der Stellantrieb für das Antriebsrad zum Einstellen der Spaltbreite zwischen den Mahlscheiben ist bezüglich der Wegführöffnung fest am Gehäuse angebracht, je nachdem, wie die Platzverhältnisse an den unterschiedlichen Kaffeemaschinentypen ausgestattet sind, muss dieser Stellantrieb bezüglich der Wegführöffnung für das Kaffeepulver an verschiedenen Positionen angeordnet werden, was zur Folge hat, dass eine Auswahlmöglichkeit an entsprechend ausgebildeten Mahlwerken vorhanden sein muss, was die Produktionskosten für diese Mahlwerke und deren Lagerhaltung erhöht.

Die Aufgabe der vorliegenden Erfindung besteht darin, ein Mahlwerk für eine Kaffeemaschine so auszugestalten, dass das Stellrad mit dem Stellantrieb zum Einstellen des Mahlspaltes zwischen den beiden Mahlscheiben bezüglich der Wegführöffnung, die am Gehäuse befestigt ist, in eine beliebige Position gebracht und fixiert werden kann.

Erfindungsgemäss erfolgt die Lösung dieser Aufgabe dadurch, dass das Stellrad an einer Halterung angeordnet ist, welche am Gehäuse angebracht ist und welche bezüglich des Gehäuses verstellbar und in jeder Position fixierbar ist.

Dadurch kann ein Einheitsmahlwerk für unterschiedliche Kaffeemaschinentypen produziert werden, je nach den Platzverhältnissen in der Kaffeemaschine kann das Stellrad in eine entsprechende Position gebracht und in dieser Position fixiert werden.

In vorteilhafter Weise ist das Stellrad an einer ringförmigen Halterung angeordnet, welche das Gehäuse umschliesst und welche bezüglich des Gehäuses verdrehbar und in jeder Position fixierbar ist, wodurch ein einfacher Aufbau und eine einfache Verstellbarkeit des Stellrades erreichbar ist.

In vorteilhafter Weise ist das Stellrad in einem Haltbügel drehbar gelagert, welcher Haltebügel an der ringförmigen Halterung befestigt ist. Dadurch wird erreicht, dass die ringförmige Halterung unterhalt oder oberhalb des Antriebsrades auf das Gehäuse aufgestülpt werden kann, und dass das Stellrad in optimaler Weise mit dem Antriebsrad in Eingriff kommt.

In vorteilhafter Weise ist die ringförmige Halterung als Spannring ausgebildet, welcher über Spannmittel in der eingestellten Position fixierbar ist, was eine sehr einfache Konstruktion und Herstellung der ringförmigen Halterung ergibt, die in einfacher Weise am Gehäuse montierbar ist.

In vorteilhafter Weise bestehen die Spannmittel aus einer Spannschraube, mittels welcher der Spannring auf der Umfangsoberfläche des Gehäuses spannbar ist, was eine besonders einfache Handhabung bei der Montage ergibt.

Die ringförmige Halterung kann auch aus einem Ring gebildet sein, welcher mit einer mindestens über einen Teil des Umfangs sich erstreckenden Profilierung ausgestattet ist, welche in eine entsprechend am Umfang des Gehäuses angebrachte Profilierung eingreift. Durch diese Profilierung wird ein verdrehsicheres Halten in einer voreinstellbaren Position der ringförmigen Halterung am Gehäuse erreicht.

Das Verstellen des Stellrades kann über ein von Hand betätigbares Steckwerkzeug ausgeführt werden, welches mit einem Steckprofil versehen ist, welches in eine entsprechend ausgebildete Öffnung des Stellrades einsteckbar ist. Das Stellrad kann aber auch motorisch angetrieben werden, dadurch kann das Antriebsrad gesteuert in die gewünschte Position gebracht werden.

In vorteilhafter Weise ist das Antriebsrad als Schneckenrad und das Stellrad als Schnecke ausgebildet, was einen besonders einfachen Verstellmechanismus ergibt.

Ausführungsformen der Erfindung werden nachfolgend anhand der beiliegenden Zeichnungen beispielhaft näher erläutert.

Es zeigt
Fig. 1 eine Schnittdarstellung durch ein Mahlwerk mit einer ersten Ausgestaltung einer ringförmigen Halterung für das Stellrad;
Fig. 2 in räumlicher Darstellung das Mahlwerk gemäss Fig. 1 in auseinander gezogenem Zustand;
Fig. 3 eine räumliche Darstellung der als Spannring ausgebildeten ringförmigen Halterung;
Fig. 4 und Fig. 5 jeweils eine Ansicht auf das Antriebsrad des Mahlwerks mit in unterschiedlichen Positionen angeordneten Stellrädern;
Fig. 6 eine Schnittdarstellung eines Mahlwerks mit einer weiteren Ausführungsform einer ringförmigen Halterung;
Fig. 7 in räumlicher Darstellung die ringförmige Halterung gemäss Fig. 6 mit dem dazugehörigen entsprechenden Gehäuseteil des Mahlwerks;
Fig. 8 eine Ansicht auf das Mahlwerk gemäss Fig. 6 mit angehobenem Gehäuse, um die ringförmige Halterung positionieren zu können.

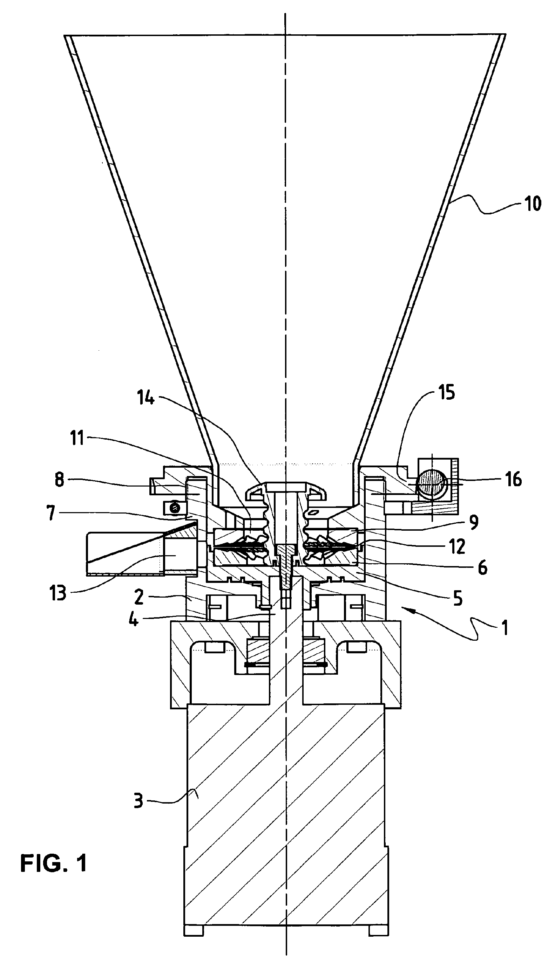

Wie aus Fig. 1 ersichtlich ist, besteht das Mahlwerk 1 aus einem Gehäuse 2, auf welches in bekannter Weise ein Elektromotor 3 aufgeflanscht ist.

Auf die Achse 4 des Elektromotors 3 ist ein Aufnahmeteil 5 aufgesetzt, in welchem die erste Mahlscheibe 6 eingesetzt und befestigt ist.

In das Gehäuse 2 eingeschraubt ist ein Einschraubteil 7, wozu das Gehäuse 2 und der Einschraubteil 7 mit jeweils einem korrespondierenden Gewindeteil 8 ausgestattet sind. Am Einschraubteil 7 ist die zweite Mahlscheibe 9 befestigt, dergestalt, dass sie koaxial und gegenüberliegend der ersten Mahlscheibe 6 angeordnet ist. Die beiden einander zugewandten Ringflächen der ersten Mahlscheibe 6 und der zweiten Mahlscheibe 9 sind in bekannter Weise mit Schneiden ausgestattet, zudem sind die Mahlscheiben 6 und 9 sphärisch und konisch gestaltet. Auf den Einschraubteil 7 aufgesetzt ist ein Trichter 10, in welchen die zu mahlenden Kaffeebohnen eingefüllt werden können. Diese Kaffeebohnen gelangen beim Mahlvorgang über eine koaxiale Öffnung 11, die in der zweiten Mahlscheibe angebracht ist, in den durch die beiden Mahlscheiben 6 und 9 gebildeten Mahlspalt 12. Beim Rotieren der ersten Mahlscheibe 6 werden die Kaffeebohnen vom Zentrum zur Peripherie der beiden Mahlscheiben 6 und 9 gefördert, auf diesem Weg werden die Kaffeebohnen zu Kaffeepulver verkleinert. Die nicht dargestellten, bekannten Pulverauswerfer, die am Umfang der ersten Mahlscheibe 6 angeordnet sind, schieben das Kaffeepulver zur am Gehäuse angebrachten Wegführöffnung 13, durch welche das gemahlene Kaffeepulver komprimiert weggeführt wird, um beispielsweise in eine Brühkammer einer Kaffeemaschine geleitet zu werden. Durch ein im Zentrum der ersten Mahlscheibe 6 befestigten, pilzförmigen Element 14 wird vermieden, dass ein Betreiber dieses Mahlwerks beispielsweise durch den Trichter 10 und die koaxiale Öffnung 11 in den Mahlspalt 12 und damit in die Schneiden der beiden Mahlscheiben 6 und 9 greifen kann.

Am Gewindeteil 8 ist ein Antriebsrad 15 angebracht, das im vorliegenden Ausführungsbeispiel als Schneckenrad ausgebildet ist. Das Schneckenrad 15 kann über ein mit diesem kämmenden Stellrad 16 verdreht werden, wobei in diesem Ausführungsbeispiel das Stellrad 16 als Schnecke ausgebildet ist. Das Stellrad 16 ist, wie später im Detail noch beschrieben wird, in einer ringförmigen Halterung 17 angeordnet, welche das Gehäuse 2 umschliesst und an diesem fixiert ist.

Durch Verdrehen des Stellrades 16 wird das Antriebsrad 15 und zusammen mit diesem der Gewindeteil 8 bezüglich des Gehäuses 2 verdreht, beim Verdrehen des Einschraubteils 7 wird dieser in das Gehäuse 2 eingeschraubt oder aus diesem herausgeschraubt, wodurch sich der Mahlspalt 12 verändert. Dadurch kann der Mahlspalt 12 eingestellt werden, wodurch unterschiedliche Feinheiten des gemahlenen Kaffeepulvers erreicht werden können.

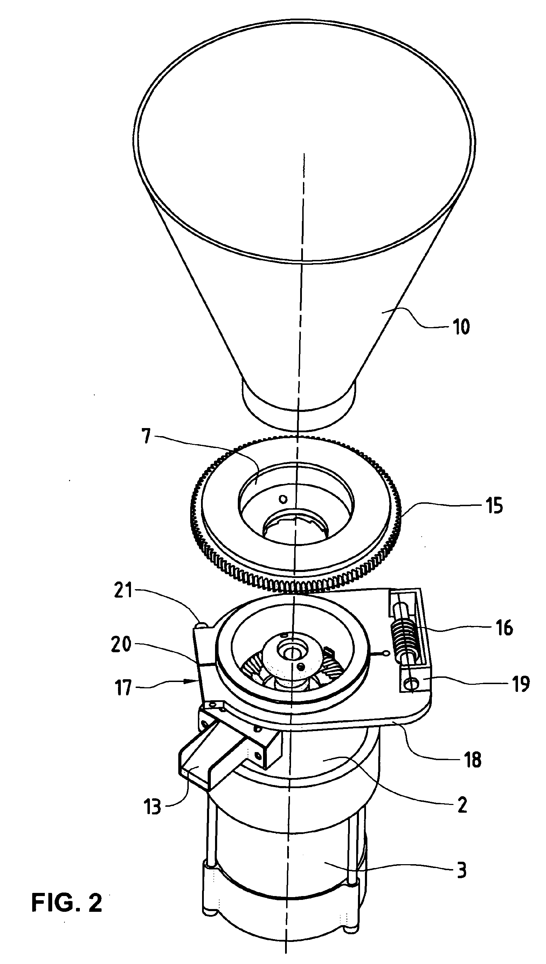

Fig. 2 zeigt das Gehäuse 2 mit dem daran befestigten Elektromotor 3. Aus dem Gehäuse 2 ausgeschraubt ist der Einschraubteil 7 mit dem daran angebrachten Antriebsrad 15. Ebenfalls aus dem Einschraubteil 7 herausgezogen ist der Trichter 10. Auf das Gehäuse 2 aufgesetzt, ist die ringförmige Halterung 17, auf welcher das Stellrad 16 verdrehbar gehalten ist. Diese ringförmige Halterung 17 ist im hier dargestellten Ausführungsbeispiel als Spannring 18 ausgebildet. Auf der einen Seite dieses Spannrings 18 ist ein Haltebügel 19 angebracht, in welchen das Stellrad 16 drehbar gehalten ist. Auf der dem Haltebügel gegenüberliegenden Seite ist der Spannring mit einem Schlitz 20 versehen, in diesem Bereich ist eine Spannschraube 21 eingesetzt, mittels welcher der Spannring 18 auf dem Gehäuse 2 fixiert werden kann, wobei er auf einer Gehäusehöhe angebracht wird, dass das Stellrad 16 optimal in das Antriebsrad 15 eingreifen kann.

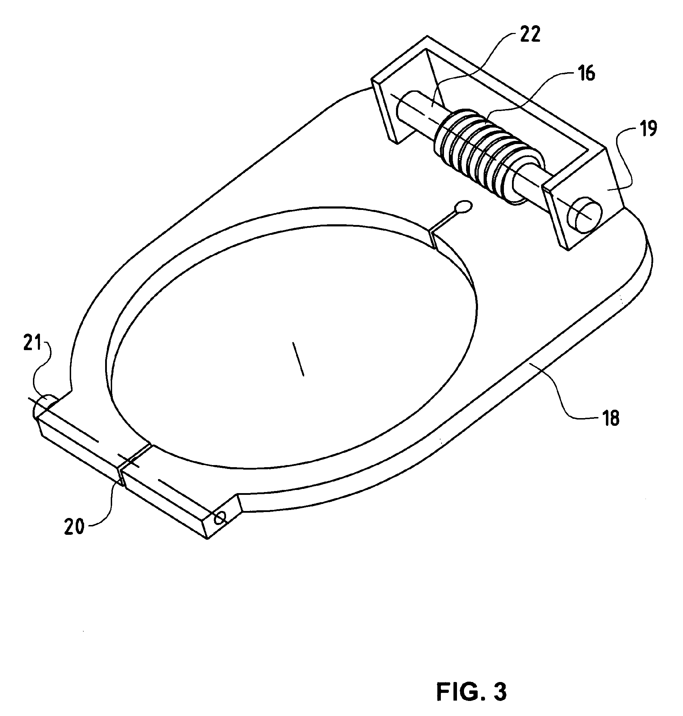

Fig. 3 zeigt in vergrösserter Darstellung den Spannring 18, mit angebrachtem Haltebügel 19, in welchem das Stellrad 16 verdrehbar gelagert ist, den Schlitz 20 und die im Bereich des Schlitzes 20 in den Spannring 18 eingesetzten Spannschraube 21.

Das Verdrehen des Einschraubteils 7 über das Stellrad 16 kann beispielsweise von Hand vorgenommen werden, indem an der Achse 22 des Stellrades 16 ein Handrad befestigt ist, das durch das Gehäuse einer Kaffeemaschine, in welche dieses Mahlwerk eingesetzt ist, hindurchragt, und über welches das Stellrad 16 verdreht werden kann. Hierzu kann auf diesem Handrad beispielsweise eine Skala angebracht sein, auf welcher beispielsweise die Spaltbreite des Mahlspaltes oder die Feinheit des gemahlenen Kaffeepulvers angegeben sein kann.

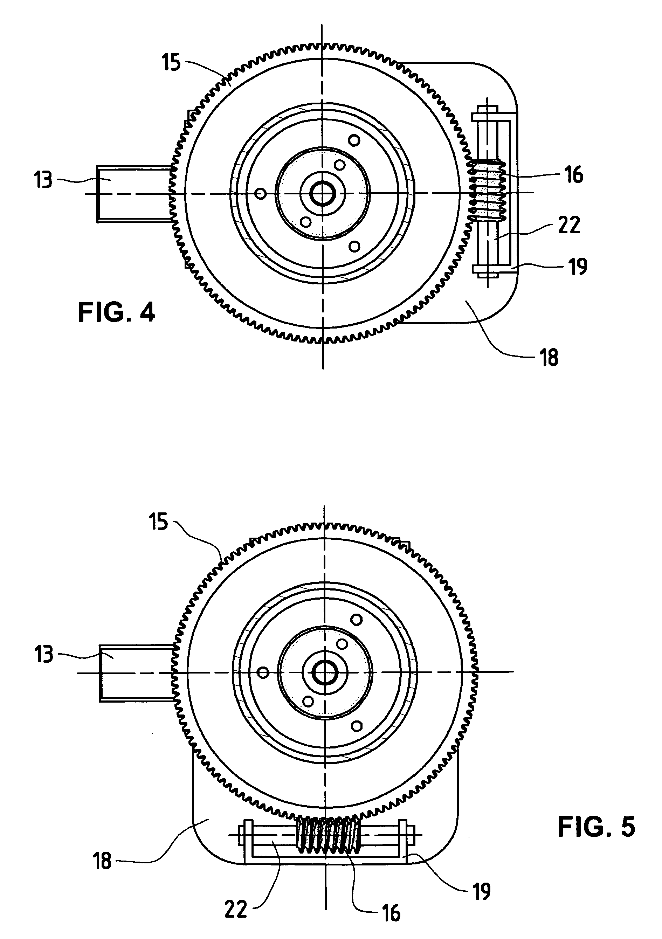

Wie aus den Fig. 4 und 5 ersichtlich ist, kann dieser Spannring 18 in einer beliebigen Winkellage, insbesondere zur Wegführöffnung 13, aufgesetzt und über die Spannschraube fixiert werden, dadurch kann das Stellrad 16 mit dem gegebenenfalls angebrachten Antrieb im eingesetzten Zustand eines Mahlwerks in eine Kaffeemaschine dort angeordnet werden, wo genügend Platz vorhanden ist.

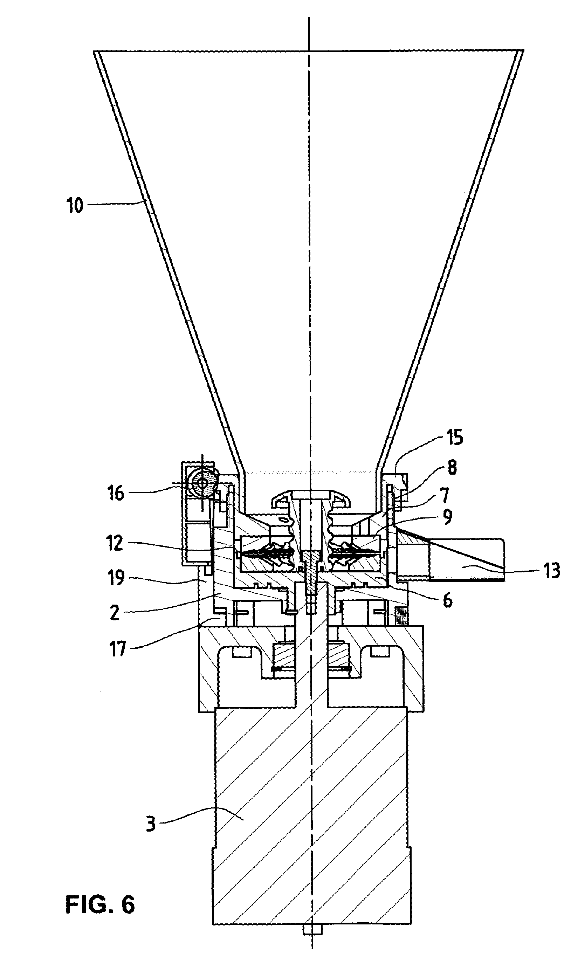

Eine weitere Ausgestaltung der Erfindung ist aus Fig. 6 ersichtlich. Das Mahlwerk 1 ist gleich aufgebaut, wie das vorgängig beschriebene Mahlwerk, bestehend aus einem Gehäuse 2, auf welches der Elektromotor 3 aufgeflanscht ist. Wiederum treibt dieser Elektromotor 3 die erste Mahlscheibe 6 an, die zweite Mahlscheibe 9 ist am Einschraubteil 7 befestigt, welcher wiederum über einen Gewindeteil 8 in das Gehäuse 2 einschraubbar ist. In den Gewindeteil 8 eingesetzt ist der Trichter 10, die Kaffeebohnen werden in identischer Weise wie beim vorgängig beschriebenen Ausführungsbeispiel durch die zweite Mahlscheibe 9 in den Mahlspalt 12 zum Mahlen geführt. Das gemahlene Kaffeepulver wird in die Wegführöffnung 13 gebracht, von wo das Kaffeepulver in bekannter Weise in die Brüheinrichtung einer Kaffeemaschine gelangen kann.

Am Einschraubteil 7 ist wiederum ein Antriebsrad 15 befestigt, welches mit einem Stellrad 16 zusammenwirkt, über welches Stellrad 16 das Antriebsrad 15 und demzufolge der Einschraubteil 7 verdreht werden kann. Durch das Verdrehen lässt sich wiederum der Mahlspalt 12 einstellen.

Das Stellrad 16 ist wiederum auf einem Haltebügel 19 drehbar gelagert, welcher Haltebügel 19 an der ringförmigen Halterung 17 befestigt ist, welche das Gehäuse 2 umschliesst.

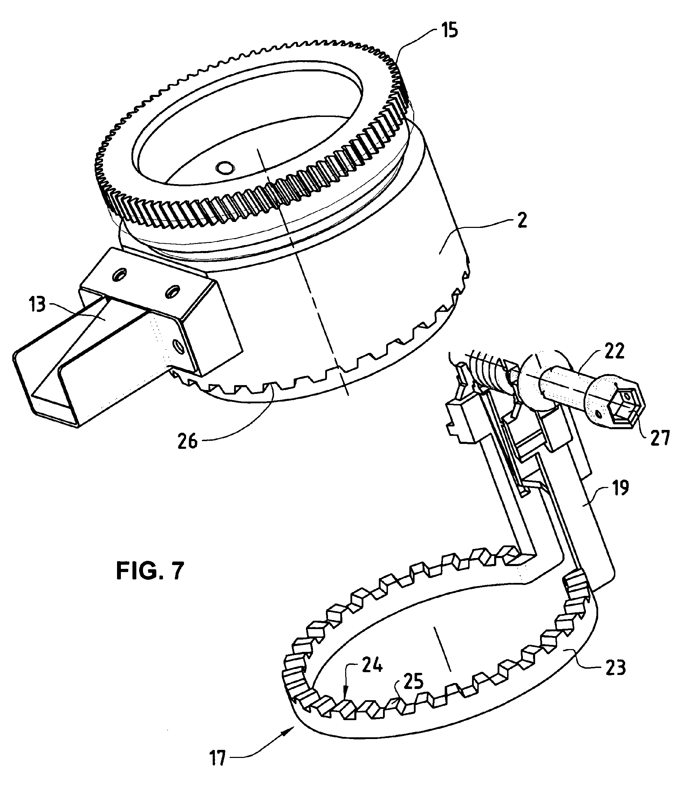

Wie insbesondere aus Fig. 7 ersichtlich ist, besteht die ringförmige Halterung 17 in diesem Ausführungsbeispiel aus einem Ring 23, an welchem der Haltebügel 19 befestigt ist. Im Haltebügel 19 ist das Stellrad 16 um die Achse 22 verdrehbar gehalten. Hierbei kann die Achse beispielsweise mit einer Öffnung 27 ausgestattet sein, die beispielsweise als Sechskantprofil ausgebildet ist, in welche ein Steckwerkzeug mit entsprechend ausgebildetem Steckprofil eingesetzt werden kann und mit welchem das Stellrad 16 verstellt werden kann, zur Einstellung der Mahlspaltbreite.

Die ringförmige Oberfläche 24 des Rings 23 ist mit einer Profilierung 25 ausgestattet, die beispielsweise ein Zahnprofil sein kann. An der Unterseite des Gehäuses 2 ist eine entsprechende Profilierung 26 angebracht, beim Anflanschen des Elektromotors an das Gehäuse 2 wird die ringförmige Halterung 17 dazwischen eingesetzt, die Profilierung 25 des Ringes 23 greift dann in die Profilierung 26 des Gehäuses ein, der Ring 23 und dadurch der Haltebügel 19 mit dem darin verdrehbar gelagerten Stellrad 16 sind verdrehfest mit dem Gehäuse 2 verbunden.

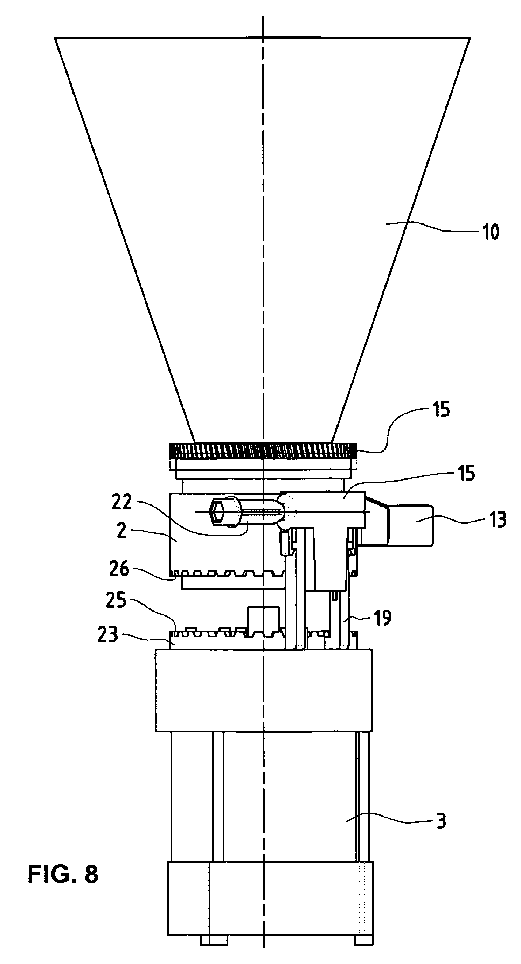

Wie aus Fig. 8 ersichtlich ist, kann beim Aufflanschen des Elektromotors 3 auf das Gehäuse 2 der zwischen Elektromotor 3 und Gehäuse 2 eingesetzte Ring 23 derart in Position gebracht werden, dass das Stellrad 16 bezüglich der Wegführöffnung 13 in der richtigen Winkellage sich befindet, um beim Einsetzen dieses Mahlwerks in eine Kaffeemaschine am richtigen Platz zu sein. Der Elektromotor 3 und das Gehäuse 2 können dann zusammengeschoben und miteinander verbunden werden, das Stellrad 16 kommt dann in Eingriff mit dem Antriebsrad 15. Dadurch kann das Stellrad 16 bezüglich der Wegführöffnung 13 in eine beliebige Position gebracht werden, wie dies in den Fig. 4 und 5 dargestellt ist, und ist in dieser Position fixiert.

Mit dieser erfindungsgemässen Ausgestaltung eines Mahlwerks kann das Stellrad 16 bezüglich des Gehäuses 2 und insbesondere der Wegführöffnung 13 in eine beliebige Winkellage gebracht werden, in dieser Winkellage wird die ringförmige Halterung 17 fixiert gehalten, diese Winkellage kann so gewählt werden, dass das Stellrad 16 in einem dafür vorgesehenen Platz in der Kaffeemaschine untergebracht werden kann. Dadurch kann ein Einheitsmahlwerk in verschiedenartige Kaffeemaschinen eingesetzt werden.

## Patentansprüche

1. Mahlwerk für eine Kaffeemaschine, umfassend ein Gehäuse (2), in welchem eine erste Mahlscheibe (6) angeordnet ist, welche über Antriebsmittel (3) um eine Rotationsachse antreibbar ist, eine zweite Mahlscheibe (9), welche in einem Einschraubteil (7) befestigt ist, welcher Einschraubteil (7) in das Gehäuse (2) einschraubbar ist und durch Verstellmittel (15, 16) bezüglich des Gehäuses (2) verdrehbar ist und **dadurch** der Mahlspalt (12) zwischen den beiden Mahlscheiben (6, 9) einstellbar ist, welche Verstellmittel aus einem koaxial zum Einschraubteil (7) angeordneten Antriebsrad (15) gebildet sind, welches mit einem über Stellmittel verdrehbaren Stellrad (16) zusammenwirkt, welches Stellrad (16) am Gehäuse (2) befestigt ist, und eine im Gehäuse (2) angeordnete Zuführöffnung für die Zuführung der zu mahlenden Kaffeebohnen und eine Wegführöffnung (13) für das Wegführen des zwischen den beiden Mahlscheiben (6, 9) gemahlenen Kaffees, **dadurch gekennzeichnet, dass** das Stellrad (16) an einer Halterung (17) angeordnet ist, welche am Gehäuse (2) angebracht ist und welche bezüglich des Gehäuses (2) verstellbar und in jeder Position fixierbar ist.

2. Mahlwerk nach Anspruch 1, **dadurch gekennzeichnet, dass** die Halterung (17) ringförmig ausgebildet ist und das Gehäuse (2) umschliesst und welche ringförmige Halterung bezüglich des Gehäuses (2) verdrehbar und in jeder Position fixierbar ist.

3. Mahlwerk nach Anspruch 2, **dadurch gekennzeichnet, dass** das Stellrad (16) in einem Haltebügel (19) drehbar gelagert ist, welcher Haltebügel (19) an der ringförmigen Halterung (17) befestigt ist.

4. Mahlwerk nach Anspruch 2 oder 3, **dadurch gekennzeichnet, dass** die ringförmige Halterung (17) als Spannring (18) ausgebildet ist, welcher über Spannmittel (21) in der eingestellten Position fixierbar ist.

5. Mahlwerk nach Anspruch 4, **dadurch gekennzeichnet, dass** die Spannmittel (21) aus einer Spannschraube bestehen, mittels welcher der Spannring (18) auf der Umfangsoberfläche des Gehäuses (2) spannbar ist.

6. Mahlwerk nach Anspruch 2 oder 3, **dadurch gekennzeichnet, dass** die ringförmige Halterung (17) aus einem Ring (23) gebildet ist, welcher mit einer mindestens über einen Teil des Umfangs sich erstreckenden Profilierung (25) ausgestattet ist, welche in eine entsprechend am Umfang des Gehäuses (2) angebrachte Profilierung (26) eingreift.

7. Mahlwerk nach einem der Ansprüche 1 bis 6, **dadurch gekennzeichnet, dass** die Stellmittel aus einem Steckwerkzeug mit einem Steckprofil bestehen, welches in eine entsprechend ausgebildete Öffnung (27) des Stellrades (16) einsteckbar ist.

8. Mahlwerk nach einem der Ansprüche 1 bis 6, **dadurch gekennzeichnet, dass** die Stellmittel einen motorischen Antrieb umfassen, mittels welchem das Stellrad (16) gesteuert motorisch antreibbar ist

9. Mahlwerk nach einem der Ansprüche 1 bis 8, **dadurch gekennzeichnet, dass** das Antriebsrad (15) als Schneckenrad und das Stellrad (16) als Schnecke ausgebildet sind.

## Claims

1. Grinder for a coffee machine, comprising a housing (2), in which a first grinding disc (6) is disposed, which is drivable via drive means (3) about a rotational axis, a second grinding disc (9), which is fixed in a screw-in part (7), which screw-in part (7) is screwable into the housing (2) and is rotatable with respect to the housing (2) via adjustment means (15, 16) and the grinding gap (12) between the two grinding discs (6, 9) is thereby settable, which adjustment means are formed by a drive wheel (15) disposed coaxially to the screw-in part (7), which drive wheel co-operates with a setting wheel (16) rotatable via setting means, which setting wheel (16) is attached to the housing (2), and a supply opening disposed in the housing (2) for supply of the coffee beans to be ground, and a discharge opening (13) for leading away the coffee ground between the two grinding discs (6, 9), **characterised in that** the setting wheel (16) is disposed on a holder (17), which is installed on the housing (2) and which is adjustable with respect to the housing (2) and is fixable in any position.

2. Grinder according to claim 1, **characterised in that** the holder (17) is of annular design and encloses the housing (2), and which annular holder is rotatable with respect to the housing (2) and is fixable in any position.

3. Grinder according to claim 2, **characterised in that** the setting wheel (16) is rotatably borne in a mounting bracket (19), which mounting bracket (19) is attached to the annular holder (17).

4. Grinder according to claim 2 or 3, **characterised in that** the annular holder (17) is designed as tension ring (18), which is fixable in the set position via tension means (21).

5. Grinder according to claim 4, **characterised in that** the tension means (21) consist of a tension screw, by means of which the tension ring (18) is able to be tensioned on the peripheral surface of the housing (2).

6. Grinder according to claim 2 or 3, **characterised in that** the annular holder (17) is formed by a ring (23) which is provided with a profile (25) extending over at least a portion of the circumference, which profile engages in a profile (26) correspondingly provided on the circumference of the housing (2).

7. Grinder according to one of the claims 1 to 6, **characterised in that** the setting means consist of a plug-in tool with a plug-in profile which is able to be plugged into a correspondingly designed opening (27) of the setting wheel (16).

8. Grinder according to one of the claims 1 to 6, **characterised in that** the setting means comprise a motor drive by means of which the setting wheel (16) is able to be motor-driven in a controlled way.

9. Grinder according to one of the claims 1 to 8, **characterised in that** the drive wheel (15) is designed as worm wheel and the setting wheel (16) as worm gear.

## Revendications

1. Broyeur pour une machine à café, comprenant un boîtier (2) dans lequel un premier disque broyeur (6) est agencé qui est susceptible d'être entraîné par un moyen moteur (3) autour d'un axe de rotation, un second disque broyeur (9) qui est fixé dans une pièce filetée (7) susceptible d'être vissée dans ledit boîtier (2) et susceptible d'être tournée par rapport audit boîtier (2) via des moyens de réglage (15, 16) et permettant de ce fait d'ajuster la fente de broyage (12) entre les deux disques broyeurs (6, 9), moyens de réglage qui sont formés par une roue motrice (15) agencée coaxialement à ladite pièce filetée (7), ladite roue motrice coopérant avec une roue d'ajustement (16) susceptible d'être tournée via des moyens d'ajustage et attachée audit boîtier (2), ainsi qu'une ouverture d'alimentation agencée dans ledit boîtier (2) pour amener des grains de café destinés à être moulus, et une ouverture de décharge (13) pour enlever le café moulu entre lesdits deux disques broyeurs (6, 9), **caractérisé en ce que** ladite roue d'ajustement (16) est agencée sur un support (17) qui est installé sur ledit boîtier (2) et qui est susceptible d'être réglé par rapport audit boîtier (2) et susceptible d'être fixé dans chaque position.

2. Broyeur selon la revendication 1, **caractérisé en ce que** ledit support (17) est façonné de forme annulaire et vient enclaver ledit boîtier (2), support annulaire qui est susceptible d'être tourné par rapport audit boîtier (2) et susceptible d'être fixé dans chaque position.

3. Broyeur selon la revendication 2, **caractérisé en ce que** ladite roue d'ajustement (16) est montée de manière pivotante dans un étrier de montage (19) attaché audit support annulaire (17).

4. Broyeur selon la revendication 2 ou 3, **caractérisé en ce que** ledit support annulaire (17) est façonné en forme d'anneau de tension (18) susceptible d'être fixé dans la position ajustée via des moyens de tensions (21).

5. Broyeur selon la revendication 4, **caractérisé en ce que** lesdits moyens de tension (21) consistent en une vis tendeuse moyennant laquelle ledit anneau de tension (18) est susceptible d'être tendu sur la surface périphérique dudit boîtier (2).

6. Broyeur selon la revendication 2 ou 3, **caractérisé en ce que** ledit support annulaire (17) est formé par un anneau (23) muni d'un profilage (25) s'étendant sur au moins une partie de la circonférence, ledit profilage venant en prise d'un profilage (26) prévu de manière correspondante sur la circonférence dudit boîtier (2).

7. Broyeur selon l'une des revendications 1 à 6, **caractérisé en ce que** lesdits moyens de réglage consistent en un outil enfichable muni d'un profilage d'enfichage susceptible d'être enfiché dans une ouverture (27) façonnée de manière correspondante, de ladite roue d'ajustement (16).

8. Broyeur selon l'une des revendications 1 à 6, **caractérisé en ce que** lesdits moyens de réglage comprennent un entraînement motorisé moyennant lequel ladite roue d'ajustement (16) est susceptible d'être entraînée par moteur d'une manière commandée.

9. Broyeur selon l'une des revendications 1 à 8, **caractérisé en ce que** ladite roue motrice (15) est façonnée comme roue hélicoïdale et ladite roue d'ajustement (16) comme vis sans fin.
